# EUROPÄISCHE PATENTSCHRIFT

(11) **EP 2 602 196 B1**
(45) Veröffentlichungstag und Bekanntmachung des Hinweises auf die Patenterteilung: **30.12.2015**
(21) Anmeldenummer: 12006423.3
(22) Anmeldetag: 13.09.2012
(51) Int. Cl.: B65B 25/00, B65B 35/08, B65B 35/24, B65G 29/00

(54) **Vereinzelungseinrichtung für kleinstückige Artikel und Verpackungsmaschine mit dieser**
Separation device for small items and packaging machine with same
Dispositif de séparation pour articles en petites pièces et machine d'emballage en étant équipé

(30) Priorität: 09.12.2011 DE 102011120786; 24.01.2012 DE 102012001360
(43) Veröffentlichungstag der Anmeldung: 12.06.2013
(73) Patentinhaber: THEEGARTEN-PACTEC GMBH & CO. KG, 01237 Dresden (DE)
(72) Erfinder: Frömmel, Thomas, 01454 Radeberg (DE); John, Steffen, 01217 Dresden (DE)
(74) Vertreter: Grünecker Patent- und Rechtsanwälte PartG mbB

(56) Entgegenhaltungen:
- EP-A2- 1 826 156
- DE-A1-102006 024 071
- DE-A1-102008 018 224
- DE-U1- 29 610 879
- US-A- 4 131 192
- US-A- 4 570 782
- US-A1- 2007 289 660

## Beschreibung

Die Erfindung betrifft eine Vereinzelungseinrichtung für kleinstückige Artikel, insbesondere Süßwaren wie Hart- oder Weichkaramellen, Gelee- oder Schokoladenprodukte, oder dgl., insbesondere zur Zuführung zu einer Verpackungsmaschine. Die Erfindung betrifft ferner eine Verpackungsmaschine mit einer derartigen Vereinzelungseinrichtung.

Hochleistungs-Verpackungsmaschinen für kleinstückige Süßwaren wie Hart- oder Weichkaramellen, erfordern leistungsstarke und zugleich verschleißarme, hochpräzise Zuführungseinrichtungen, die für den späteren Verpackungserfolg bereits vorbestimmend sind und einerseits entsprechende Arbeitsgeschwindigkeiten in der Bereitstellung der Produkte, wie auch deren zuverlässige Handhabung gewährleisten müssen.

Überdies werden üblicherweise insbesondere empfindliche Produkte, wie Gelee- oder Schokoladenprodukte, Pralinen od. dgl. über Längsfördereinrichtungen, z.B. Mitnehmerketten in den Bereich von Entnahmerädern (denen zugleich der Packstoff zugeführt werden kann) von Verpackungsmaschinen, die nach dem kontinuierlichen Prinzip arbeiten, zugeführt, wobei sich an das Entnahmerad zumindest eine Packkopf anschließt (Zweikopf-Maschine). Ggf. kann die Packstoffzufuhr insbesondere bei komplizierten Artikeln auch über ein separates Greiferrad zwischen Entnahmerad und Packkopf erfolgen, in dem Packstoff und vereinzeltes Produkt vereinigt werden (Dreikopf-Maschine).

Alternaiv werden derartige Artikel auch häufig in Schlauchbeuteln in Einzel- oder Mehrfachverpackung verpackt, so dass die Artikel einer Schlauchbeutelmaschine zugeführt werden, was im Allgemeinen durch eine Längsfördereinrichtung, wie ein Transportband oder eine Transportkette mit Mitnehmern (Mitnehmerkette), geschieht. Wenn nicht vom Strang gearbeitet wird, ist es oft erforderlich, die als ungeordnetes Sammel- oder Schüttgut durch einen rotierenden Vereinzelungsteller vereinzelten Artikel von dort in einen Längsförderer zu überführen.

Es erfolgt also entweder eine Zufuhr "aus der Kette" (oder von einem Transportband, ggf. mit Mitnehmern und/oder erhöhenden Auflageflächen) zu der Verpackungsmaschine oder es erfolgt üblicherweise die Artikelaufgabe- und Zuführung zu der Verpackungsmaschine direkt über eine umlaufende Vereinzelungseinrichtung, die z.B. als rotierende Vereinzelungsscheibe ausgebildet ist.

Eine solche weist (unabhängig davon, ob aus dieser die Produkte durch ein rotierenden Entnahmekopf einer Verpackungsmaschine entnommen oder die Artikel vereinzelt an eine Längsfördereinrichtung übergeben werden) einen rotierenden, im Allgemeinen mit radial nach auswärts abfallenden Bereichen versehenen Vereinzelungsteller auf, an dessen Außenumfang ein Aufgabering selbständig rotierend angeordnet ist, der Taschen zur vereinzelten Aufnahme der einzelnen Artikel aufweist. Je nach Empfindlichkeitsgrad der Artikel werden diese in ungeordneter schüttungsartiger Aufgabe dem um eine zentrale Mittelachse rotierenden Vereinzelungsteller zugeführt und unter Schwerkraft- und Fliehkrafteinfluss nach außen in die Taschen des Aufgaberinges überführt und dabei vereinzelt, zur vereinzelten Bereitstellung der Artikel an den ersten Kopf der Verpackungsmaschine oder zur Übergabe an einen Längsförderer. Hierbei werden Bürsten oder ähnliche Homogenisierungseinrichtungen verwendet, um einen möglichst nahezu 100%igen Füllgrad des Aufgaberinges zu realisieren, so dass eine hohe Produktivität und Effizienz der Verpackungsmaschine sichergestellt wird.

Wie die DE 10 2008 018 224 A verdeutlicht, ist eine Verkettung von Vereinzelungsteller und Längsfördereinrichtung auch unter Einsatz eines rotierenden Entnahmekopfes, der die vereinzelte Produkte aus dem Vereinzelungsteller entnimmt und einer Längsfördereinrichtung (Mitnehmerkette) übergibt, möglich.

Diese Vereinzelungsteller, die um eine stationäre Mittelachse rotierend und zentral durch einen im Bereich der Mittelachse vorgesehenen Antrieb angetrieben (siehe z.B. DE-OS 10 2006 024 071 A1) werden, weisen in ihren Antriebs- und Lagerungselementen allerdings ein gewisses Spiel auf, das sich aufgrund des radialen Abstandes zwischen zentralem Mittelachsantrieb und dem radial außenliegenden Aufgabering) Ungenauigkeiten und Antriebsfehlern vergrößern.

Der Erfindung liegt daher die Aufgabe zugrunde, eine Vereinzelungseinrichtung zu schaffen, die einerseits eine höhere Variabilität und Genauigkeit in der Artikelführung, insbesondere zu einer Verpackungsmaschine, und höhere Förderleistungen ebenso ermöglicht wie eine Flexibilisierung ihres Antriebes gestattet.

Zudem soll die Vereinzelungseinrichtung auch eine vorteilhafte Kombination mit weiteren Artikelführungssystemen, auch in Verbindung mit Verpackungsmaschinen, gestatten und eine präzise Kopplung unterschiedlicher Zuführungssysteme für die Artikel ermöglichen.

Der Erfindung liegt ferner die Aufgabe zugrunde, eine Kombination aus Vereinzelungseinrichtung für kleinstückige Artikel und einer Längsfördereinrichtung zu deren Zufuhr zu einer Verpackungsmachine anzugeben, die sich durch eine kompakte Aufgabe auszeichnet und ein einfaches Antriebskonzept gestaltet.

Der Erfindung liegt schließlich die Aufgabe zugrunde, eine Verpackungsmaschine mit einem grundsätzlich verbesserten Artikel-Zuführungssystem im Bereich einer Vereinzelungseinrichtung zu schaffen.

Die vorgenannte Aufgabe wird hinsichtlich der Vereinzelungseinrichtung erfindungsgemäß durch die Merkmale des Anspruches 1 gelöst, wobei vorteilhafte Ausgestaltungen des Erfindungsgegenstandes Gegenstand der zugehörigen Unteransprüche sind.

Die Erfindung wird hinsichtlich der Kombination einer Vereinzelungs- und Längsfördereinrichtung durch die Merkmale des Anspruchs 13, hinsichtlich der Verpackungsmaschine durch die Merkmale des Anspruches 15 gelöst.

Grundsätzliches Element der Vereinzelungseinrichtung ist ihre Ausgestaltung als Rotationselement, wie z.B. als Vereinzelungsteller oder Vereinzelungsring, das bzw. der im Bereich seines Außenumfanges angetrieben ist.

Dies führt dazu, dass eine hochpräzise, spielfreie Lagerung und entsprechender, sehr präziser Antrieb eines Aufgaberinges, der radial außenliegender, vorzugsweise separater Teil des Rotationselementes, insbesondere Vereinzelungstellers, ist, erreicht werden kann, da sich der Antrieb unmittelbar im Bereich eines "Teilkreises" des Aufgaberinges befindet, der durch die, die Artikel vereinzelnden Aufnahmen (wie Taschen) bestimmt wird. Der Antrieb kann so nahe zu dem Aufgabering selbst und vorzugsweise nahe eines Artikelführungsbereiches des Vereinzelungstellers, der durch einen äußeren Ringbereich gebildet wird, erfolgen.

Die Artikel werden vorzugsweise auf einem Innentellerbereich des Vereinzelungstellers, nämlich dem ringförmigen Artikelzuführungsbereich (radial einwärts aber benachbart zu dem Aufgabering angeordnet und vorzugsweise mit größerer Geschwindigkeit als dieser umlaufend) aufgegeben (regellos zugeführt) und fliehkraftbedingt radial nach außen zum Aufgabe ring, der vorzugsweise unabhängig und in gleich- oder gegensinniger Drehrichtung zum Artikelzuführungsbereich drehbar ist, in Artikelaufnahmen (z.B. Taschen oder andere die Artikel vereinzelnde Aufnahmen oder Abteile, die zu einer diskreten Abfolge von Artikeln führen) gefördert.

In Abkehr vom üblichen Stand der Technik ist der Bereich des Vereinzelungstellers, in dem die Artikel regellos zugeführt werden, daher ebenfalls als außenliegender Ring ausgebildet, benachbart zum radial weiter außenliegenden Aufgabering, wobei der Antrieb für den Aufgabering durch ein Antriebselement erfolgt, das im Bereich des Aufgaberinges nahe diesem vorgesehen ist. Überdies kann auch der Antrieb für den Innentellerbereich (Artikelzuführungsbereich) selbst vorzugsweise in diesem außenliegenden Außenumfangsbereich vorgesehen sein, und zwar entweder gemeinsam mit dem Antrieb des Aufgaberinges oder separat von diesem. Er kann jedoch auch z.B. über ein Zugmittelgetriebe den Innenteller- oder Artikelzuführungsbereich von einem an anderer Stelle wie z.B. nahe der zentralen Achse des Vereinzelungstellers angebrachten Antrieb rotierend angetrieben werden.

Vorzugsweise ist der außenliegende Antrieb des Aufgaberinges zugleich als Antriebsvorrichtung für eine Längsfördereinrichtung, wie eine Mitnehmerkette ausgebildet, z.B., indem eine entsprechende, sich radial erstreckende Antriebswelle sowohl Abtriebselemente für den Antrieb des Aufgaberinges als auch für den Antrieb einer Längsfördereinrichtung, wie z.B. einer Mitnehmerkette (vorzugsweise über eine auf der Antriebswelle befindliche Kettenradanordnung), vorgesehen ist. Auch hier kann die Längsfördereinrichtung alternativ separat und ohne mechanische Kopplung zum Antrieb des Aufgaberinges angetrieben werden.

Im Rahmen der Erfindung kann daher sowohl die Artikelvereinzelung in den Aufgabering dazu dienen, dass ein erster Entnahmekopf einer Verpackungsmaschine die Artikel aus dem Aufgabering direkt aufnimmt, oder aber es kann die Vereinzelungseinrichtung in einer Kopplung eines rotierenden Vereinzelungstellers mit einer Längsfördereinrichtung bestehen, aus der dann die der Verpackungsmaschine linear zugeführten Artikel, z.B. aus einem Raum zwischen Mitnehmer und Mitnehmerkette, durch einen Entnahmekopf einer Verpackungsmaschine entnommen oder nach Zuführung von Folienmaterial, Aufnahme der Artikel und Siegeln einzelner Schlauchbeutel in einer Schlauchbeutel-Verpackungsmaschine verpackt werden.

Für die Genauigkeit der Artikelzuführung und des Antriebes des Aufgaberinges ist es vorteilhaft, wenn ein außenliegender Antrieb des Aufgaberinges, vorzugsweise über einen Zahnkranz nahe dem Teilkreis des Aufgaberinges, vorgesehen wird, wobei auch Vereinzelungsteller mit Aufgaberingen mit wesentlich vergrößertem Durchmesser gegenüber bisherigen Vereinzelungstellern verwendet und damit eine korrespondierende Artikelzufuhr zu der Verpackungsmaschine mit geringerer Tellerdrehzahl oder aber eine Steigerung in der Artikelzufuhr pro Zeiteinheit, z.B. in Verbindung mit einer Erhöhung des Teilkreisdurchmessers des Aufgaberinges des Vereinzelungstellers unter direkterem Antrieb desselben am Lagerungsort im Außenbereich des Aufgaberinges erreicht wird.

Vorteile der Vereinzelungseinrichtung und einer Verpackungsmaschine mit einer solchen bestehen in der Verwendung von in Durchmesser sehr großen Lagerungselementen für den Antrieb des Aufgaberinges ebenso wie für die Lagerung des Innentellers bzw. des der Artikelzufuhr dienenden äußeren Randbereiches desselben, wobei diese vorzugsweise unabhängig voneinander in einem Gestellring gelagert sind. Die Lagerung nahe des Teilkreises des Aufgaberinges führt zu einem sehr guten Planlauf mit geringerem Radialschlag, so dass hierdurch auch ein sehr energieeffizienter, präziser Antrieb des Aufgäberinges erreicht wird. Auch wird hierdurch ein modulares Antriebskonzept mit unabhängig ansteuerbaren Servomotoren im Bereich der Vereinzelungseinrichtung unterstützt.

Für den Fall, dass zugleich z.B. ein Kettenrad einer Mitnehmerkette vom Antrieb des Aufgaberinges angetrieben wird, ergibt sich aufgrund starrer Wellenkopplung ein geringes Verdrehspiel des Aufgaberinges gegenüber z.B. einer Mitnehmerkette und somit eine höhere Genauigkeit bei einer Artikelübergabe von dem Aufgabering des Vereinzelungstellers in die Längsfördereinrichtung (Mitnehmerkette).

Außerdem ist nur ein sehr geringer baulicher Aufwand zum Antrieb der Mitnehmerkette erforderlich.

Andererseits ist es auch möglich, eine Längsfördereinrichtung in Kopplung mit einem Vereinzelungsteller über eine zweite separate Servoantriebseinheit unabhängig vom Aufgabering anzutreiben. Eine solche, eine mechanische Kopplung zwischen Aufgabering und Mitnehmerkette ersetzende, elektronische Kopplung durch zwei Servoantriebe bietet den Vorteil, dass leere Taschen im Aufgabering, die sensorisch erkannt werden, dazu führen, dass der Aufgabering gegenüber der Mitnehmerkette (Längsfördereinrichtung) um eine entsprechende Taschenanzahl in Drehrichtung vorverstellt (vorgedreht) werden kann. Ehe der nächste Mitnehmer die Übergabestelle erreicht, steht dann wieder ein Produkt zur Übergabe und Aufnahme in die Längsfördereinrichtung (d.h. in die Mitnehmerkette) zur Verfügung.

Ein solcher, flexibler Antrieb ist vorteilhaft, wenn die zugehörige Verpackungsmaschine mit häufigen Formatwechseln betrieben wird, und es wird hierdurch auch die Bereitstellung von Produkten, z.B. an eine Schlauchbeutelmaschine verbessert und es werden bei schlechtem Füllgrad der Vereinzelungseinrichtung (Vereinzelungsteller) z.B. Leerbeutel (kein Produkt zwischen zwei Mitnehmern der Längsfördereinrichtung) vermieden.

Auch bei unterschiedlichen Mehrstückverpackungen auf einer Maschine ist hierdurch ein flexiblerer Antrieb möglich. Überdies werden bei Mehrfachpackungen Leerstellen vermieden (kein Produkt), die zum Verlust der ganzen Packung führen.

Vorzugsweise ist die Vereinzelungseinrichtung ein Vereinzelungsteller in einer Ringstruktur, in einem Ringgestell gelagert und mit einem ringförmigen Artikelzuführungs- oder Innentellerbereich und einem radial an diesen sich anschließenden Aufgabering. Vorzugsweise sind diese Ringstrukturen (Aufgabe- und Artikelzuführungsbereich) segmentiert und werden in Umfangrichtung geteilt z.B. aus drei oder vier Segmenten (120° oder 90° Teilung) zusammengefügt.

Die Erfindung wird nachstehend anhand von zwei Ausführungsbeispielen und zugehörigen Zeichnungen näher erläutert. In diesen zeigen:
- Fig. 1: eine schematische Teil-Schnittdarstellung einer Vereinzelungseinrichtung nach einem ersten Ausführungsbeispiel;
- Fig. 2: eine schematische Teil-Schnittdarstellung einer Vereinzelungseinrichtung nach einem ersten Ausführungsbeispiel nach Fig. 1 mit aufgegebenen Artikeln;
- Fig. 3: eine schematische Teil-Schnittdarstellung einer Vereinzelungseinrichtung nach einem zweiten Ausführungsbeispiel;
- Fig. 4: eine schematische Teil-Schnittdarstellung einer Vereinzelungseinrichtung nach einem zweiten Ausführungsbeispiel nach Fig. 2 mit aufgegebenen Artikeln.

Eine Vereinzelungseinrichtung 1 des ersten und zweiten Ausführungsbeispieles wird vorzugsweise in Verbindung mit Süßwaren-Verpackungsmaschinen eingesetzt, die kleinstückige Süßwaren, die vereinzelt zugeführt werden, entweder nach dem Prinzip kontinuierlicher Maschinen unter rotatorischer Artikelführung in der Verpackungsmaschine verpackt werden oder die z.B. als kleinstückige Artikel auch in Schlauchbeuteln einer Schlauchbeutelmaschine zur vereinzelten oder auch gemeinsamen Verpackung in einem Schlauchbeutel, z.B. durch eine Längsfördereinrichtung zugeführt werden. Mischformen beider Prinzipien sind möglich.

Eine solche Verpackungsmaschine mit rotatorischer Zuführung vereinzelter Artikel ist z.B. aus der DE 10 2008 019 605 A1 oder DE 10 2005 021 491 A1 bekannt.

Eine Linearzuführung von kleinstückigen Artikeln wie Hart- oder Weichkaramellen, Schokoladenstücken, Pralinen o. dgl. kann z.B. in Schlauchbeutel einer Schlauchbeutelmaschine erfolgen.

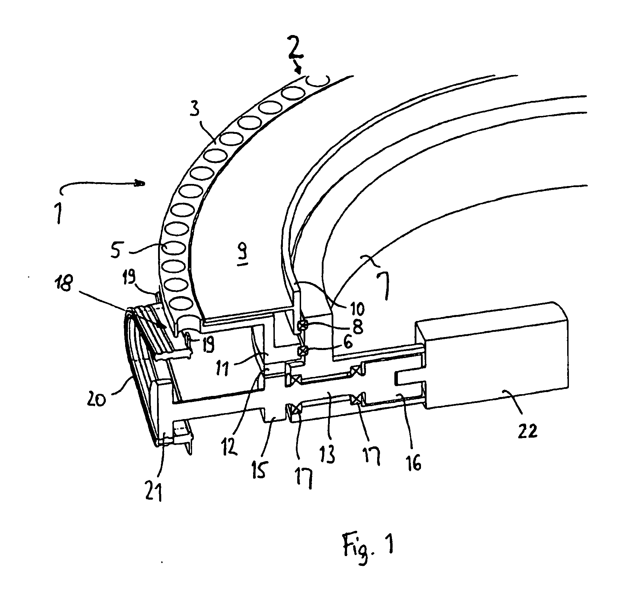

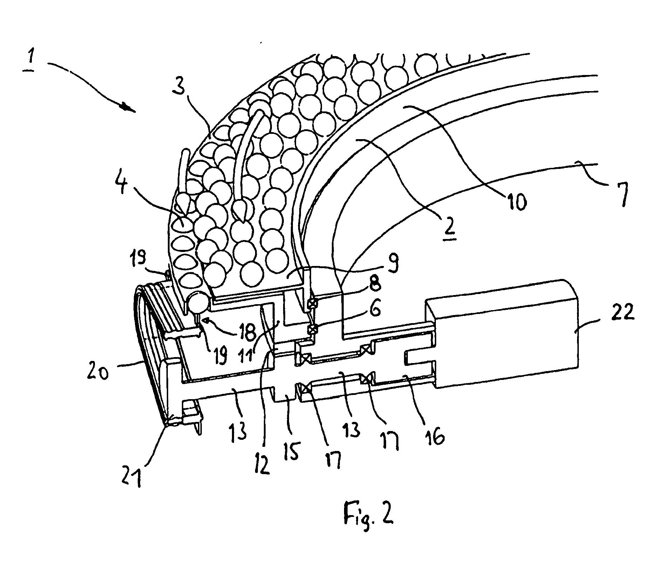

Grundlage eines ersten, in Figur 1 schematisch im Teilschnitt dargestellten Ausführungsbeispieles ist eine Vereinzelungseinrichtung 1, die einen Vereinzelungsteller 2 aufweist, der an seinem Außenumfang einen Aufgabering 3 für die vereinzelten Artikel 4 (s. Fig. 2) aufweist, von dem aus die Artikel, z.B. durch Greiferbackenpaare eines rotierenden Entnahmekopfes einer Verpackungsmaschine (hier nicht gezeigt) entnommen werden können. Dieser Aufgabering 3 ist ebenso rotatorisch angetrieben wie der gesamte Vereinzelungsteller 2, auf den die in Figur 2 dargestellten Artikel 4 regellos aufgegeben werden, worauf sie in herkömmlicher Weise unter Schwerkraft- und/oder Fliehkrafteinfluss in Taschen 5, die regelmäßig im Aufgabering 3 vorgesehen sind, vereinzelt werden, um sodann z.B. von einem ersten rotierenden Kopf einer Verpackungsmaschine (hier nicht gezeigt) ergriffen und verpackt oder an eine Längsfördereinrichtung 20 übergeben zu werden.

Im vorliegenden Fall ist ein erstes Ausführungsbeispiel dargestellt, in dem solchermaßen vereinzelte Artikel 4 in eine darunterliegende Längsfördereinrichtung, d.h. z.B. eine Mitnehmerkette 20 in einem Artikelübergabebereich 18 übergeben werden, so dass sie tangential von dem Vereinzeltungsteller 2 weggefördert und linear einer Verpackungsmaschine zugeführt werden, die z.B. ebenfalls die Artikel aus der Mitnehmerkette mittels eines rotierenden ersten Kopfes entnehmen oder aber auch unter Zufuhr entsprechenden Folienschlauchmateriales die Artikel in einer Schlauchbeutelmaschine verpacken kann.

Tragendes Element des Vereinzelungstellers 2, der hier als Ringelement ausgebildet ist, ist ein ringförmiges Gestell 7, an dem der Vereinzelungstellers 2 über zwei Ringlager 6, 8 drehbar gelagert ist.

Mit seinem erheblichen Durchmesser im Bereich von z.B. 1000 mm ist der Vereinzelungsteller 2 in einen Innentellerbereich, der als Artikelzuführungsring 9 ausgeführt ist, der radial einwärts durch eine Ringbarriere 10 begrenzt ist und einen Aufgabering 3 mit Taschen 5 zur Aufnahme und Vereinzelung der Artikel 4 unterteilt.

Der Vereinzelungstellers 2 ist also ein Ringteller, bestehend aus dem ringförmigen Artikelzuführungsbereich 9, nach innen begrenzt durch die Ringbarriere 10 und den Aufgabering 3.

Vorzugsweise wird der Aufgabering 3 des Vereinzelungstellers 2 separat von dem Artikelzuführungsring 9 und den übrigen Elementen des Vereinzelungstellers angetrieben, so dass in vorteilhafter Weise und durch einfache Motoransteuerung eine gewisse Differenz zwischen der Rotationsgeschwindigkeit des Aufgaberinges 3 und derjenigen des Artikelzuführungsringes 9 des Vereinzelungstellers 2 eingerichtet werden kann, durch die ein möglichst 100%iger Füllgrad des Vereinzelungstellers 2, d.h. eine lückenlose Aufnahme von Artikeln 4 in den Taschen 5 des Aufgaberinges 3 gefördert wird. Vorzugsweise ist die Drehgeschwindigkeit des Artikelzuführungsbereiches größer als diejenige des Aufgaberings 3. Beide drehen sich wie die Pfeile in Figur 2 andeuten, vorzugsweise in die gleiche Richtung, ohne dass dies zwingend ist.

Eine Besonderheit des Vereinzelungstellers 2 gegenüber herkömmlichen Vereinzelungstellern besteht also darin, dass dieser ringförmig ausgebildet ist und nur den Artikelzuführungsring 9 an den sich radial außenliegend und separat von diesem drehbar der Aufgabering 3 anschließt. Nach innen wird der Artikelzuführungsring 9 durch die integrale Ringbarriere 10 begrenzt. Es ist allerdings auch denkbar (wenn auch hier nicht dargestellt), den inneren Teil des Vereinzelungstellers, in dem hier nur das Ringgestell 7 gezeigt ist, oberhalb des Gestells 7 ebenfalls mit einer Abdeckung (Innenteller) zu versehen, wobei diese entweder stationär sein oder aber auch mit der integral drehbaren Ringbarriere 10 verbunden sein kann. Alternativ und in Verbindung mit Durchbrechungen der Ringbarriere 10 (hier nicht gezeigt) könnte auch eine Artikelzufuhr von innerhalb der Ringbarriere 10 nach außen in Richtung Aufgabering 3 erfolgen.

In dem ersten Ausführungsbeispiel ist zum außenliegenden Antrieb des Aufgaberinges 3 und dessen Außenlagerung am Gestell 7 über das Ringlager 6 ein Servoantrieb 22 über eine Kupplung 16 in Verbindung mit einer Radialwelle 13 vorgesehen, die als Abtriebselement ein Zahnrad 15 trägt und im Gestell 7 gelagert ist. Ein Antriebs-Zahnkranz 12 für den rotierenden Antrieb eines Lagerungsteiles 11 des Aufgaberinges 3 gestattet einen Antrieb des Aufgaberinges 3 des Vereinzelungstellers 2 im Bereich seines Teilkreises, d.h. nahe seines auf seinen Durchmesser bezogene Mittenabstandes gegenüberliegender Tasche 5 des Aufgaberinges 3. Der Antriebs- Zahnkranz 12 ist fest mit dem Lagerungsringkörper 11 des Aufgaberinges 3 verbunden und ggf. kann auch integral mit diesem ausgebildet sein.

Die Radialwelle 13 ist über eine Doppelllagerung 17 im Gestell 7 gelagert, wohingegen der Artikelzuführungsring 9 ebenfalls über ein durchmessergroßes Ringlager 8 am Gestell gelagert ist. Die großen Ringlager 6, 8 für die radial außenliegende Lagerung des Vereinzelungstellers 2 (Artikelzuführungsring 9, Aufgabering 3) entsprechend einander in dieser Ausführung.

Der Antrieb für den Artikelzuführungsring 9 ist im vorliegenden Fall nicht gezeigt und kann über einen separaten Motor bewirkt werden (z.B. von einer achsnahen Position des Vereinzelungstellers 2 über einen Zugmittel-(Ketten)- oder Reibradantrieb, so dass eine Rotationsgeschwindigkeitsdifferenz zwischen Artikelzuführungsring 9 und Aufgabering 3 einstellbar ist, die eine Wanderungsbewegung der Artikel 4 (s. Fig. 2) in die Taschen 5 des Aufgaberinges 3 und deren Vereinzelung erleichtert.

Es ist aber auch denkbar, auch diesen Antrieb in mechanischer Kopplung über die Antriebs-Radialwelle 13 zu bewirken oder aber auch den Artikelzuführungsring 9 und den Aufgabering 3 (unter Verzicht auf die Möglichkeit unterschiedlicher Umfangsgeschwindigkeiten) miteinander fest zu verbinden oder integral auszuführen.

Ein solcher radial außen angetriebener Vereinzelungsteller 2 kann unmittelbar mit einer Verpackungsmaschine gekoppelt werden, aus der z.B. eine Entnahmekopf die vereinzelten Artikel aus dem Aufgabering 3 entnimmt.

Im vorliegenden Fall dient der Vereinzelungsteller 2 als Artikel-Vereinzelungseinrichtung zur Übergabe an einen Längsförderer 20, der unter Ausbildung eines Artikelübergabebereiches 18 mit Mitnehmern 19 versehen ist und auf den die vereinzelten Artikel 4 im Artikelübergabebereich 18 über ein hier nicht näher dargestellte Übergabevorrichtung aufgegeben werden. Zwischen zwei abfolgenden Mitnehmern 19 können auch mehrere Artikel 4 auf dem Längsförderer 20 platziert werden, z.B. wenn eine Mehrzahl von Artikeln 4 gemeinsam in einem Schlauchbeutel einer Schlauchbeutel-Verpackungsmaschine verpackt werden sollen. Der Längsförderer 20 kann sowohl ein Bandförderer als auch ein Kettenförderer sein und die radiale Antriebswelle 13 besitzt ein äußeres Antriebs- oder Kettenrad 21 in starrer Kopplung mit dem Zahnrad 15 zum Antrieb des Zahnkranzes 12 des Aufgaberinges.

Vorzugsweise ist der Längsförderer eine Mitnehmerkette 20 und das fest auf der radialen Antriebswelle vorgesehene Antriebsrad ein Kettenrad 21.

Zwischen dem Längsförderer, hier Mitnehmerkette 20 und dem Aufgabering 3 kann vorzugsweise eine Geschwindigkeitsdifferenz bestehen derart, dass zugleich eine Synchronisation für den nachfolgenden Verpackungsprozess vorgesehen ist, d.h. eine präzise vorgegebene Position der Artikel 4 zwischen Mitnehmern 19 der Mitnehmerkette 20 vorgesehen ist. Dies gilt vorzugsweise insbesondere für den Fall, dass die Artikel 4 einzeln verpackt werden. In diesem Fall kann vorzugsweise eine geringfügig höhere Geschwindigkeit der Mitnehmerkette 20 dafür sorgen, dass sich die Artikel 4 an den Mitnehmern 19 der Mitnehmerkette anlegen und diese so einer nachgeschalteten Verpackungsmaschine synchronisiert zugeführt werden.

Aufgrund des besonderen, äußeren Antriebes des Vereinzelungstellers 2 bzw. des Aufgaberinges 3 sind Lagerungselemente 6, 8 für die Drehlagerung des Ringkörpers 11 des Aufgaberinges 3 am Gestell 7 von erheblichem Durchmesser erforderlich, die zugleich aber zu einer hochpräzisen Lagerung des Aufgaberinges 3 führen.

Der Antrieb des Aufgaberinges 3 des Vereinzelungstellers 2 erfolgt in dem ersten Ausführungsbeispiel über eine Antriebseinheit bestehend aus Elektromotor (Servomotor) 22 (oder Getriebemotor), Kupplung 16 und Zahnrad 15, welches in den Zahnradkranz 12 eingreift, der nahe dem Teilkreis des Aufgaberinges 3, (mit dem man den Durchmesserabstand gegenüberliegender Taschen (bis zur Mittelachse derselben) des Aufgaberinges bezeichnen kann) vorgesehen ist, vorzugsweise mit diesem verschraubt ist und der den Aufgabering antreibt.

Der Zahnradkranz 12 kann auch integral mit dem Lagerungsringkörper 11 des Aufgaberinges 3 ausgebildet sein, in dem dieses mit einer entsprechenden Verzahnung versehen ist.

An dem Lagerungsringkörper ist der Aufgabering 3 befestigt oder integral mit diesem ausgeführt.

Durch den Antrieb des Aufgaberinges 3 nahe seinem Teilkreis bzw. im Teilkreis des Zahnradkranzes 12, benachbart zu dem Aufgabering 3, wird ein extrem geringes Winkelspiel (Spiel in der präzisen, reproduzierbaren Einstellung eines vorgegebenen Winkels) bzw. werden sehr geringe Winkelfehler erreicht und ist ein Antrieb mit minimalem Antriebsmoment möglich.

Durch den mechanisch über die Antriebswelle 13 starr mit dem Abtrieb (Zahnrad 15) für den Antrieb des Aufgaberinges 3 (Eingriff in den Zahnradkranz 12) gekoppelten Antrieb der Mitnehmerkette 20 durch das wellenfeste Kettenrad 21 wird ein sehr geringes Verdrehspiel des Aufgaberinges gegenüber der Mitnehmerkette 20 und somit eine sehr exakte Artikelübergabe von dem Aufgabering 3 in die Mitnehmerkette 20 realisiert.

In Figur 2 zeigt das erste Ausführungsbeispiel unter Einbeziehung der auf den Artikelzuführungsring 9 des Vereinzelungstellers 2 (dieser besteht aus dem Artikelzuführungsring 9 und dem Aufgabering 3) aufgegebenen Artikel 5.

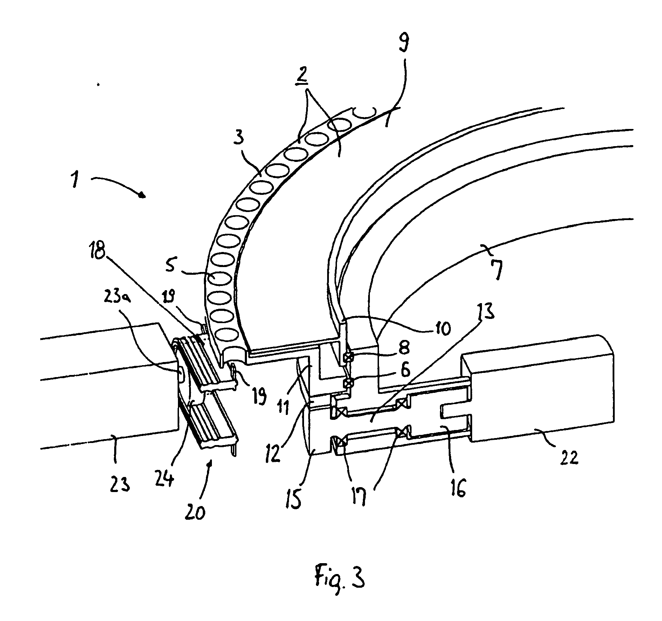

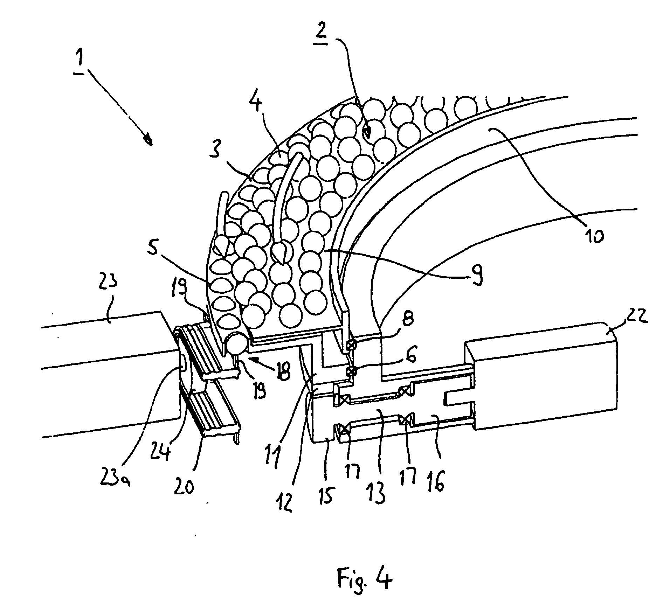

Ein zweites Ausführungsbeispiel ist in den Figuren 3 und 4 gezeigt.

Das zweite Ausführungsbeispiel wird nur hinsichtlich seiner Unterschiede zum ersten Ausführungsbeispiel erläutert. Soweit nicht besonders erwähnt, gelten alle Ausführungen zum ersten Ausführungsbeispiel auch für das zweite und den Figuren 3 und 4.

Es unterscheidet sich von dem ersten Ausführungsbeispiel dahingehend, dass für den Längsförderer, hier die Mitnehmerkette 20, ein separater Antrieb über einen separaten Servomotor 23 vorgesehen ist, dessen Abtriebswelle 23a das Kettenrad 24 zum Eingriff mit der Mitnehmerkette 20 trägt, so dass der Antrieb des Längsförderers 20 mechanisch vom Antrieb des Aufgaberinges 3 des Vereinzelungstellers 2 entkoppelt ist.

Der Antrieb des Aufgaberinges 3 erfolgt in gleicher Weise wie beim ersten Ausführungsbeispiel über ein wellenfestes Zahnrad 15 im Kämmeingriff mit dem Zahnradkranz 12, der seinerseits mit dem Lagerungsringkörper 11 des Aufgaberinges 3 fest verbunden oder integral mit diesem ausgeführt ist. Die sich radial erstreckende Antriebswelle 13 wird wiederum von einem Servomotor bzw. Elektromotor 22 über eine Kupplung 16 angetrieben.

Dieses Antriebskonzept ist besonders vorteilhaft dahingehend, als es eine Relativbewegung und Einstellung zwischen Aufgabering 3 und Mitnehmerkette (Längsförderer) 20 ermöglicht, so dass z.B. dann, wenn eine hier nicht dargestellte Sensoreinrichtung einen zu niedrigen Füllgrad des Aufgaberinges 3 feststellt und leere Taschen 5 im Aufgabering erkannt werden, der Aufgabering 3 gegenüber der Mitnehmerkette 20 um die entsprechende Anzahl Taschen 5 in Drehrichtung vorverstellt bzw. vorgedreht werden kann. Daher steht dann, wenn der nächste Mitnehmer 19 der Mitnehmerkette 20 die Übergabestelle bzw. den Artikelübergabebereich 18 erreicht, stets wieder ein Artikel 4 zur Übergabe in die Mitnehmerkette 20 zur Verfügung.

Auch für häufige Formatwechsel ist ein solches, flexibleres Antriebskonzept vorteilhaft und, in Verbindung mit der relativen Stellbarkeit des Aufgaberinges 3 in Bezug auf den Längsförderer bzw. die Mitnehmerkette 20, werden z.B. bei Verwendung des Systems für eine Schlauchbeutelmaschine Leerbeutel bzw. Fehlzuführungen zur Verpackungsmaschine vermieden.

Ein solches flexibles Antriebskonzept ist auch bei unterschiedlichen Mehrstückpackungen, die auf einer Verpackungsmaschine hergestellt werden sollen, von Vorteil.

Durch die Ringausführung des Vereinzelungstellers 2 wird überdies dessen Masse gegenüber herkömmlichen Ausführungen deutlicher herabgesetzt, so dass auch das Massenträgheitsmoment und die erforderlichen Beschleunigungs- und Antriebskräfte verringert sind, was wiederum vorteilhaft auf die erforderliche Installation von Antriebsleistung für den Antrieb des Vereinzelungstellers 2, hier genauer des Artikelzuführungsringes 9, wirkt.

Eine Besonderheit der Vereinzelungseinrichtung sind die großen Lagerelemente 6, 8 (Ringlager, vorzugsweise Kugellager) mit einem Durchmesser von z.B. ca. 900 mm, die nahe des Teilkreises des Aufgaberinges 3 angeordnet werden, wobei das Lagerelement 6 für den Aufgabering 3 und das Lagerelement 8 für den übrigen Vereinzelungsteller, d.h. für den Artikelzuführungsring 9, unabhängig voneinander im ringförmigen Gestell 7, gelagert sind.

In den vorgenannten Ausführungsbeispielen besteht der Vereinzelungsteller 2, insbesondere Artikelzuführungsring 9 mit Aufgabering 3 und/oder die Ringbarriere 10, aus mehreren Segmenten, die mittels montagegünstiger Verbindungselemente zu einer Ringstruktur verbunden sind (auch wenn dies in den Figuren nicht extra gezeigt ist).

Ferner ist in den gezeigten Ausführungsbeispielen der Vereinzelungssteller stets als Ringkörper ausgebildet, bei denen die Artikel bereits unmittelbar benachbart zu dem Aufgabering 3 und seinen Taschen 5 aufgegeben werden.

Durch die Erfindung wird ein neuartiges Antriebskonzept für den Antrieb einer Vereinzelungseinrichtung, insbesondere eines Vereinzelungstellers, sowohl als individuelle Zuführungseinrichtung, insbesondere zu einer Verpackungsmaschine oder aber auch als Zuführungskonzept zur Übergabe vereinzelte Artikel von einem rotierenden Aufgabering in einen Längsförderer geschaffen, von dem die Artikel synchronisiert und in präziser Positionierung, abgestimmt auf einen nachfolgenden Verarbeitungstakt einer Verarbeitungsmaschine, insbesondere einer Verpackungsmaschine, zugeführt werden können

Das hier geschilderte Prinzip des Antriebs eines Vereinzelungstellers oder eines Aufgaberings 3 mit den vereinzelten Artikeln desselben ist aber auch auf andere Maschinenkonfigurationen bzw. Vereinzelungsteller übertragbar, die der Vereinzelung von Artikeln dienen, um von einem rotierenden Entnahmekopf, dem z.B. auch Packstoff zugeführt wird und der neben schwenkbaren Entnahmeeinheiten zum Ergreifen der Artikel auch Packstoffhaltemittel (Packmittelzangen) zugeordnet sind, aufgenommen zu werden.

## Patentansprüche

1. Vereinzelungseinrichtung (1) für kleinstückige Artikel (4) zur Zuführung derselben zu einer Verpackungsmaschine, mit einem Vereinzelungsteller (2), aufweisend eine ringförmigen Artikelzuführbereich (9) sowie einen diesen umgebenden Aufgabering (3) zur Artikelvereinzelung, wobei der Aufgabering (3) eine Ringlagerung (6) und ein Antriebselement (12) aufweist und eine Ringlagerung (8) für den ringförmigen Artikelzuführbereich (9) vorgesehen ist.

2. Vereinzelungseinrichtung (1) nach Anspruch 1, **gekennzeichnet durch** eine Längsfördereinrichtung (20) angeordnet im Bereich des Aufgaberinges (3) und mit einem Produktübergabeabschnitt zwischen Aufgabering (3) und Längsfördereinrichtung (20).

3. Vereinzelungseinrichtung (1) nach Anspruch 1 oder 2, **gekennzeichnet durch** eine Antriebseinrichtung (22) mit einer Welle (13) und Abtriebsmitteln (15) im Eingriff mit dem Antriebselement (12) des Aufgaberinges (3) und/oder einem Antriebselement (21) der Längsfördereinrichtung (20), und/oder einem Abtriebselement zum Antrieb eines Artikelzufuhrbereiches (9) des Vereinzelungstellers (2).

4. Vereinzelungseinrichtung (1) nach Anspruch 1 oder 2, **gekennzeichnet durch** einen separaten Antrieb (23) für die Längsfördereinrichtung (20), und/oder eine separate Antriebseinrichtung für den Artikelzufuhrbereich (9) des Vereinzelungstellers (2).

5. Vereinzelungseinrichtung (1) nach einem der vorhergehenden Ansprüche 1 bis 4, **gekennzeichnet durch** eine Ringbarriere (10) zur inneren Begrenzung des Artikelzuführungsringes (9) des Vereinzelungstellers (2).

6. Vereinzelungseinrichtung (1) nach einem der vorhergehenden Ansprüche 1 bis 5, **gekennzeichnet durch** einen Antriebs-Zahnkranz (12) als ringförmiges Antriebselement des Aufgaberinges (3) zur vereinzelten Weitergabe von Artikeln (4) von dem Vereinzelungsteller (2).

7. Vereinzelungseinrichtung (1) nach Anspruch 5 oder 6, **gekennzeichnet durch** einen stationären Ringgestell (7) zur Abstützung zumindest eines Ringlagers (6, 8), insbesondere Kugellagerringes zur Drehlagerung des Artikelzuführungsringes (9) sowie des Antriebselementes zum Antrieb des radial außenliegenden Aufgaberinges (3).

8. Vereinzelungseinrichtung (1) nach einem der vorhergehenden Ansprüche 3 bis 7, **gekennzeichnet durch** eine mit der Antriebseinrichtung (22) verbundene radiale Antriebswelle (13), die ein Zahnrad (15) als Abtriebelement, zum Eingriff mit einem Zahnkranzring (12) als Antriebselement des Aufgaberinges (3) trägt.

9. Vereinzelungseinrichtung nach Anspruch 8, **dadurch gekennzeichnet, dass** die Antriebwelle (13) im Gestell (7) gelagert ist.

10. Vereinzelungseinrichtung nach einem der vorhergehenden Ansprüche 2 bis 8 **dadurch gekennzeichnet, dass** die Längsfördereinrichtung eine Mitnehmerkette (20) ist.

11. Vereinzelungseinrichtung nach einem der Ansprüche 8 bis 10, **dadurch gekennzeichnet, dass** die Antriebswelle (13) ein Kettenrad (21) als Antriebelement der Längsfördereinrichtung (20) trägt.

12. Vereinzelungseinrichtung (1) nach einem der vorhergehenden Ansprüche 1 bis 11, **dadurch gekennzeichnet, dass** die Längsfördereinrichtung (20) tangential zu dem Aufgabering (3) angeordnet und zwischen diesen eine Artikelübergabevorrichtung (18) vorgesehen ist.

13. Kombination einer rotierenden Vereinzelungseinrichtung, nach einem der vorhergehenden Ansprüche 1 bis 12 mit einer Längsfördereinrichtung (20) und einem getrennten oder gemeinsamen Antrieb von Vereinzelungseinrichtung (2) und Längsfördereinrichtung (20).

14. Kombination nach Anspruch 13, **dadurch gekennzeichnet, dass** sich die Längsfördereinrichtung (20) tangential zu dem Aufgabering (3) erstreckt.

15. Verpackungsmaschine für kleinstückige Artikel, insbesondere Süßwarenartikel, wie Hart- oder Weichkaramellen oder dergleichen, **gekennzeichnet durch** eine Vereinzelungseinrichtung (1) nach einem der vorhergehenden Ansprüche 1 bis 12 oder eine Kombination nach Anspruch 13 oder 14.

## Claims

1. Separation device (1) for small items (4), for supplying said items to a packaging machine, comprising a separating plate (2) having an annular item supplying region (9) and a feeding ring (3) for item separation surrounding said item supplying region, wherein the feeding ring (3) has a ring bearing (6) and a drive element (12), and a ring bearing (8) is provided for the annular item supplying region (9).

2. Separation device (1) according to claim 1, **characterized by** a longitudinal conveying device (20) arranged in the region of the feeding ring (3) and having a product transfer section between the feeding ring (3) and the longitudinal conveying device (20).

3. Separation device (1) according to claim 1 or 2, **characterized by** a drive device (22) having a shaft (13) and output means (15) in engagement with the drive element (12) of the feeding ring (3) and/or a drive element (21) of the longitudinal conveying device (20), and/or an output element for driving an item supplying region (9) of the separating plate (2).

4. Separation device (1) according to claim 1 or 2, **characterized by** a separate drive (23) for the longitudinal conveying device (20), and/or a separate drive device for the item supplying region (9) of the separating plate (2).

5. Separation device (1) according to any of the preceding claims 1 to 4, **characterized by** an annular barrier (10) for the inner boundary of the item supplying ring (9) of the separating plate (2).

6. Separation device (1) according to any of the preceding claims 1 to 5, **characterized by** a drive sprocket (12) as an annular drive element of the feeding ring (3) for forwarding items (4) individually from the separating plate (2).

7. Separation device (1) according to claim 7 or 6, **characterized by** a stationary annular frame (7) for supporting at least one ring bearing (6, 8), in particular a ball-bearing ring for the rotational bearing of the item supplying ring (9) and the drive element for driving the radially outer feeding ring (3).

8. Separation device (1) according to any of the preceding claims 3 to 7, **characterized by** a radial drive shaft (13) which is connected to the drive device (22) and which carries a toothed wheel (15) as the output element for engaging with a sprocket ring (12) as the drive element of the feeding ring (3).

9. Separation device according to claim 8, **characterized in that** the drive shaft (13) is borne in the frame (7).

10. Separation device according to any of the preceding claims 2 to 8, **characterized in that** the longitudinal conveying device is a carrier chain (20).

11. Separation device according to any of claims 8 to 10, **characterized in that** the drive shaft (13) carries a chain wheel (21) as the drive element for the longitudinal conveying device (20).

12. Separation device (1) according to any of the preceding claims 1 to 11, **characterized in that** the longitudinal conveying device (20) is arranged tangential to the feeding ring (3) and an item transfer device (18) is provided therebetween.

13. Combination of a rotating separation device, according to any of the preceding claims 1 to 12, with a longitudinal conveying device (20) and a separate or common drive for the separation device (2) and the longitudinal conveying device (20).

14. Combination according to claim 13, **characterized in that** the longitudinal conveying device (20) extends tangential to the feeding ring (3).

15. Packaging machine for small items, in particular confectionary items, such as hard or soft caramels or the like, **characterized by** a separation device (1) according to any of the preceding claims 1 to 12 or a combination according to claim 13 or 14.

## Revendications

1. Dispositif séparateur (1) pour des articles (4) de petite taille, en vue de leur amenée à une machine d'emballage, comprenant un disque de séparateur (2) qui comporte une zone d'alimentation en articles (9) de forme annulaire et, entourant celle-ci, un anneau de distribution (3) pour la séparation individuelle des articles, dispositif séparateur dans lequel l'anneau de distribution (3) comporte un palier annulaire de rotation (6) et un élément d'entraînement (12), et dans lequel il est prévu un palier annulaire de rotation (8) pour la zone d'alimentation en articles (9) de forme annulaire.

2. Dispositif séparateur (1) selon la revendication 1, **caractérisé par** un dispositif de transport longitudinal (20) agencé dans la zone de l'anneau de distribution (3), et par un secteur de transfert de produit entre l'anneau de distribution (3) et le dispositif de transport longitudinal 20).

3. Dispositif séparateur (1) selon la revendication 1 ou la revendication 2, **caractérisé par** un dispositif d'entraînement (22) avec un arbre (13) et des moyens d'entraînement (15) en prise avec l'élément d'entraînement (12) de l'anneau de distribution (3) et/ou un élément d'entraînement (21) du dispositif de transport longitudinal (20) et/ou un élément d'entraînement pour l'entraînement d'une zone d'alimentation en articles (9) du disque de séparateur (2).

4. Dispositif séparateur (1) selon la revendication 1 ou la revendication 2, **caractérisé par** un entraînement séparé (23) pour le dispositif de transport longitudinal (20), et/ou un dispositif d'entraînement séparé pour la zone d'alimentation en articles (9) du disque de séparateur (2).

5. Dispositif séparateur (1) selon l'une des revendications précédentes 1 à 4, **caractérisé par** une barrière annulaire (10) destinée à la délimitation intérieure de l'anneau d'alimentation en articles (9) du disque de séparateur (2).

6. Dispositif séparateur (1) selon l'une des revendications précédentes 1 à 5, **caractérisé par** une couronne dentée d'entraînement (12) en tant qu'élément d'entraînement annulaire de l'anneau de distribution (3) pour la poursuite du transfert individuel d'articles (4) à partir du disque de séparateur (2).

7. Dispositif séparateur (1) selon la revendication 5 ou la revendication 6, **caractérisé par** un bâti annulaire (7) stationnaire, destiné à supporter au moins un palier annulaire (6, 8), notamment un palier annulaire à billes, pour le montage en rotation de l'anneau d'alimentation en articles (9) ainsi que de l'élément d'entraînement destiné à l'entraînement de l'anneau de distribution (3) situé radialement à l'extérieur.

8. Dispositif séparateur (1) selon l'une des revendications précédentes 3 à 7, **caractérisé par** un arbre d'entraînement (13) radial, relié au dispositif d'entraînement (22), et qui porte une roue dentée (15) en guise d'élément de sortie d'entraînement, pour venir en prise avec un anneau de couronne dentée (12) en guise d'élément d'entraînement de l'anneau de distribution (3).

9. Dispositif séparateur selon la revendication 8, **caractérisé en ce que** l'arbre d'entraînement (13) est monté sur palier dans le bâti (7).

10. Dispositif séparateur selon l'une des revendications précédentes 2 à 8, **caractérisé en ce que** le dispositif de transport longitudinal est une chaîne à entraîneurs (20).

11. Dispositif séparateur selon l'une des revendications 8 à 10, **caractérisé en ce que** l'arbre d'entraînement (13) porte une roue à chaîne (21) en guise d'élément d'entraînement du dispositif de transport longitudinal (20).

12. Dispositif séparateur (1) selon l'une des revendications précédentes 1 à 11, **caractérisé en ce que** le dispositif de transport longitudinal (20) est agencé tangentiellement à l'anneau de distribution (3), et **en ce qu'**il est prévu entre eux un dispositif de transfert d'articles (18).

13. Combinaison d'un dispositif séparateur rotatif selon l'une des revendications précédentes 1 à 12, avec un dispositif de transport longitudinal (20) et un entraînement séparé ou commun du dispositif séparateur (2) et du dispositif de transport longitudinal (20).

14. Combinaison selon la revendication 13, **caractérisée en ce que** le dispositif de transport longitudinal (20) s'étend tangentiellement à l'anneau de distribution (3).

15. Machine d'emballage pour des articles de petite taille, notamment des caramels durs ou mous, et des articles similaires, **caractérisée par** un dispositif séparateur (1) selon l'une des revendications précédentes 1 à 12 ou une combinaison selon la revendication 13 ou la revendication 14.
